# EUROPÄISCHE PATENTANMELDUNG

(11) **EP 2 319 732 A2**
(43) Veröffentlichungstag der Anmeldung: **11.05.2011**
(21) Anmeldenummer: 10013998.9
(22) Anmeldetag: 27.10.2010
(51) Int. Cl.: B60Q 1/48, B60Q 1/50, B60Q 1/52, G08G 1/16, B60W 30/08

(54) **Vorrichtung und Verfahren zur Überwachung und Signalisierung von Verkehrssituationen und Betriebszuständen in einem Fahrzeug und im Umfeld des Fahrzeugs**

(30) Priorität: 10.11.2009 DE 102009052589
(71) Anmelder: Valeo Schalter und Sensoren GmbH, 74321 Bietigheim-Bissingen (DE)
(72) Erfinder: Gotzig, Heinrich, 74357 Bönnigheim (DE); Mathes, Joachim, 74080 Heilbronn (DE)

(57) **Zusammenfassung**

Es werden eine Vorrichtung und ein Verfahren zur Verringerung der Unfallgefahr während einer kritischen Situation eines eigenen Fahrzeugs beschrieben. Die Vorrichtung umfasst eine Einrichtung zur Überwachung der Umgebung des eigenen Fahrzeugs auf eine Präsenz mindestens eines anderen Verkehrsteilnehmers hin, eine Einrichtung zur Überwachung eines Betriebszustands des eigenen Fahrzeugs, sowie eine Mensch-Maschine-Schnittstelle (HMI; Human Machine Interface), welche zumindest einen in der Umgebung des eigenen Fahrzeugs anwesenden anderen Verkehrsteilnehmer mittels geeigneter Mittel warnt, wenn sich das eigene Fahrzeug in einer durch Vorliegen wenigstens eines bestimmten Betriebszustands des eigenen Fahrzeugs und Anwesenheit wenigstens eines anderen Verkehrsteilnehmers in der Umgebung des eigenen Fahrzeugs gegebenen kritischen Situation befindet. Das Verfahren sieht zunächst eine Überwachung eines Betriebszustands des eigenen Fahrzeugs und der Umgebung des eigenen Fahrzeugs auf eine Präsenz mindestens eines anderen Verkehrsteilnehmers hin vor. Anschließend sieht das Verfahren vor, anhand der Überwachung des Betriebszustands des eigenen Fahrzeugs und anhand der Überwachung der Umgebung des eigenen Fahrzeugs festzustellen, ob eine sich durch mindestens einen bestimmten Betriebszustand des eigenen Fahrzeugs sowie Präsenz zumindest eines anderen Verkehrsteilnehmers in der Umgebung des eigenen Fahrzeugs ergebende kritische Situation vorliegt, oder nicht. Liegt eine kritische Situation vor, wird gemäß dem Verfahren mindestens ein anderer Verkehrsteilnehmer in der Umgebung des eigenen Fahrzeugs gewarnt.

## Beschreibung

### Stand der Technik

Die Erfindung betrifft eine Vorrichtung gemäß dem Oberbegriff des Anspruchs 1 und ein Verfahren gemäß dem Oberbegriff des Anspruchs 12.

Im Straßenverkehr kommt es meist zu einer kritischen Situation, wenn der Fahrer eines kurz als Fahrzeug bezeichneten Kraftfahrzeugs entweder auf einen bestimmten Betriebszustand des eigenen Fahrzeugs beispielsweise aus einer Gewohnheit heraus vertraut und/oder es in einem bestimmten Betriebszustand des eigenen Fahrzeugs dem Fahrer schlicht nicht möglich ist, alle denkbaren Gefahrenmomente und -bereiche zu berücksichtigen und/oder zu überschauen bzw. zu überwachen. Gefährlich und unfallträchtig wird es dann, wenn sich gleichzeitig ein anderer Verkehrsteilnehmer in den Gefahrenbereich begibt oder dort befindet.

Beispiele, in denen es zu kritischen Situationen kommen kann, sind Fahrzeuge in einem Rangierbetrieb, in welchem der Fahrer eine nur eingeschränkte Übersicht über die Umgebung des eigenen Fahrzeugs hat, und beispielsweise hinter dem eigenen Fahrzeug befindliche Hindernisse oder Passanten, die beispielsweise in die Bahn des eigenen Fahrzeugs laufen, nicht oder nur mit entsprechenden Hilfsmittel, wie etwa Ultraschallsensoren (UPA-Sensoren; Ultrasonic-Park-Assist-Sensoren), indirekt oder nur eingeschränkt erkennen kann.

Ferner sind als Ein- und/oder Ausparksysteme bezeichnete Fahrassistenzvorrichtungen an sich bekannt, welche einen Fahrer eines Fahrzeugs während eines Ein- und/oder Ausparkvorgangs in eine Parklücke hinein oder aus einer Parklücke heraus unterstützen, indem sie das Fahrzeug assistiert ein- oder ausparken, wobei ein autonomer und/oder semiautonomer Fahrvorgang ausgeführt wird, während dem das Fahrzeug voll- oder halbautomatisch oder beispielsweise durch Fahr- und Lenkanweisungen an den Fahrer geführt gesteuert wird, ganz gleich ob sich die Parklücke beispielsweise längs oder quer zu einer Fahrbahn befindet.

Auch ein solcher autonomer und/oder semiautonomer Fahrvorgang eines eigenen Fahrzeugs kann zu einer kritischen Situation führen, weil der Fahrer sich darauf verlässt, dass das Ein- und/oder Ausparksystem den Fahrvorgang sicher und insbesondere kollisionsfrei durchführt.

Weitere kritische Situationen können sich beispielsweise bei zukünftigen Antriebskonzepten für Fahrzeuge dadurch ergeben, dass die Fahrzeuge im Betrieb oder wenigstens in bestimmten Betriebszuständen immer leiser werden, wodurch sich deren Annäherung in der Umgebung akustisch nicht mehr wahrnehmen lässt.

Durch DE 197 30 366 B4 ist eine Steuereinrichtung zum Steuern von Signaleinrichtungen eines Fahrzeugs bekannt, welche bei einer ermittelten drohenden Unfallgefahr zusätzlich zu einer Aktivierung von Warnblinkleuchten wenigstens zwei weitere zur Serienausstattung des Fahrzeugs gehörende Signaleinrichtungen aktiviert. Die drohende Unfallgefahr kann aus Messwerten eines Abstandsradars ermittelt werden.

Durch US 5,091,726 ist bekannt, durch Einschalten der Bremsleuchten des eigenen Fahrzeugs ein hinter dem eigenen Fahrzeug fahrendes anderes Fahrzeug zu warnen, wenn ein Mindestabstand zwischen eigenem und anderem Fahrzeug unterschritten wird.

Eine Abhilfe in den meisten kritischen Situationen kann bereits eine Ausgabe einer Warnung an die Umgebung des eigenen Fahrzeugs leisten. Bekannt ist beispielsweise eine periodische Ausgabe von Warntönen bei Lastkraftwagen in Rückwärtsfahrt.

### Offenbarung der Erfindung

Als eine Aufgabe der Erfindung kann angesehen werden, eine Vorrichtung und ein Verfahren anzugeben, mit denen die Unfallgefahr während einer kritischen Situation eines eigenen Fahrzeugs verringert werden kann. Die Aufgabe wird gelöst durch eine Vorrichtung mit den Merkmalen des Anspruchs 1 bzw. durch ein Verfahren mit den Merkmalen des Anspruchs 12.

Ein erster Gegenstand der Erfindung betrifft demnach eine Vorrichtung zur Überwachung und Signalisierung von Verkehrssituationen Betriebszuständen eines Fahrzeugs und im Umfeld eines Fahrzeugs und damit zur Verringerung der Unfallgefahr während einer kritischen Situation eines eigenen Fahrzeugs, insbesondere Kraftfahrzeugs, insbesondere Personenkraftwagen, wobei die Vorrichtung erfindungsgemäß mit einer Mensch-Maschine-Schnittstelle (HMI; Human Machine Interface) ausgestattet ist, welche wenigstens einen sich in der Umgebung des eigenen Fahrzeugs befindlichen anderen Verkehrsteilnehmer, beispielsweise einen Fahrer zumindest eines anderen Fahrzeugs oder einen Fußgänger oder einen Fahrradfahrer, mittels geeigneter Mittel warnt, wenn eine kritische Situation vorliegt. Das Vorliegen einer kritischen Situation wird in vorteilhafter Weise mittels einer Einrichtung zur Überwachung der Umgebung des eigenen Fahrzeugs sowie mittels einer Einrichtung zur Überwachung eines Betriebszustands des eigenen Fahrzeugs ermittelt. Dabei liegt eine kritische Situation des eigenen Fahrzeugs vor bzw. wird herbeigerufen, wenn sich das eigene Fahrzeug in wenigstens einem bestimmten Betriebszustand, beispielsweise einem autonomen und/oder semiautonomen Fahrvorgang und/oder einem reinen Elektrobetrieb und/oder einem Rangierbetrieb, befindet und zusätzlich zumindest ein anderer Verkehrsteilnehmer in der Umgebung des eigenen Fahrzeugs präsent bzw. anwesend ist.

Es ist erkennbar, dass die Erfindung in jedem Fall dadurch verwirklicht ist, dass eine Warnung an die Umgebung des eigenen Fahrzeugs bzw. wenigstens einen sich in der Umgebung des eigenen Fahrzeugs befindlichen anderen Verkehrsteilnehmer abgegeben wird, wenn sich eine kritische Situation des eigenen Fahrzeugs durch Vorliegen wenigstens eines bestimmten Betriebszustands des eigenen Fahrzeugs sowie zusätzlich der Präsenz zumindest eines anderen Verkehrsteilnehmers in der Umgebung des eigenen Fahrzeugs ergibt. Die kritische Situation wird hierbei über zwei unabhängige Voraussetzungen definiert, durch Vorliegen wenigstens eines bestimmten Betriebszustands des eigenen Fahrzeugs sowie zusätzlich der Präsenz zumindest eines anderen Verkehrsteilnehmers in der Umgebung des eigenen Fahrzeugs.

Vorteile der Erfindung gegenüber dem Stand der Technik ergeben sich unter anderem dadurch, dass andere Verkehrsteilnehmer in der Umgebung des eigenen Fahrzeugs vom Vorliegen einer kritischen Situation in Kenntnis gesetzt werden, damit diese entsprechend reagieren können. Dadurch wird die Unfallgefahr während einer durch wenigstens einen bestimmten Betriebszustand des eigenen Fahrzeugs sowie zusätzlich der Präsenz zumindest eines anderen Verkehrsteilnehmers in der Umgebung des eigenen Fahrzeugs vorliegenden kritischen Situation verringert. Die Erfindung nutzt den Umstand, dass es in der überwiegenden Anzahl von kritischen Situationen bereits hilfreich ist, wenn die an der kritischen Situation Beteiligten hiervon in Kenntnis gesetzt werden, um beispielsweise ihr Verhalten durch z. B. erhöhte Aufmerksamkeit und/oder Verlassen eines Gefahrenbereichs der kritischen Situation anpassen zu können. Weitere Vorteile ergeben sich beispielsweise dadurch, dass die Umgebung nicht auf abstumpfende dauerhafte Art und Weise permanent und grundlos mit Warnungen, beispielsweise mit akustischen und/oder optischen Warnsignalen belästigt wird, sondern nur dann, wenn eine kritische Situation vorliegt, die sich aus einer Kombination eines oder mehrerer Betriebszustände des eigenen Fahrzeugs, beispielsweise einer oder mehrerer vorliegenden Fahrsituationen, mit der zusätzlichen Präsenz eines anderen Verkehrsteilnehmers in der Umgebung des eigenen Fahrzeugs ergibt. Darüber hinaus trägt die Erfindung so zum Lärmschutz bei, da bei Abwesenheit anderer Verkehrsteilnehmer keine Warnung ausgegeben wird bzw. auf eine Ausgabe einer Warnung verzichtet werden kann.

Bei einem zu einer kritischen Situation führenden, bzw. eine Voraussetzung zum Vorliegen einer kritischen Situation darstellenden Betriebszustand des eigenen Fahrzeugs kann es sich beispielsweise um einen reinen Elektrobetrieb handeln, in dem das eigene Fahrzeug so gut wie keine in der Umgebung wahrnehmbare Betriebs- und/oder Fahrgeräusche abgibt. Alternativ oder zusätzlich kann es sich bei einem solchen Betriebszustand um einen autonomen oder semiautonomen Fahrvorgang handeln, beispielsweise ein von einem Ein- und/oder Ausparksystem durchgeführten Ein- und/oder Ausparkvorgang. Alternativ oder zusätzlich kann es sich bei dem Betriebszustand um einen Rangierbetrieb des eigenen Fahrzeugs handeln. Wichtig ist hierbei hervorzuheben, dass die Aufzählung der Betriebszustände des eigenen Fahrzeugs nicht als abschließend, sondern nur als beispielhaft zu verstehen ist.

Die Mittel können ein von bzw. in der gesamten Umgebung des eigenen Fahrzeugs bzw. von anderen, innerhalb der Umgebung präsenten Verkehrsteilnehmern wahrnehmbares externes Signal erzeugen.

Alternativ oder zusätzlich können die Mittel ein von anderen Fahrzeugen wahrnehmbares bzw. empfangbares Signal erzeugen.

Eine besonders vorteilhafte Ausgestaltung der Erfindung sieht vor, dass das HMI den wenigstens einen anderen Verkehrsteilnehmer über die Art des die kritische Situation mit herbeirufenden bzw. mit herbeigerufenen Betriebszustands informiert.

Vorzugsweise umfassen die geeigneten Mittel zumindest eine Wiederholblinkleuchte des eigenen Fahrzeugs und/oder wenigstens eine akustische Signaleinrichtung und/oder mindestens eine Leuchtenfunktion zumindest einer Leuchte des eigenen Fahrzeugs und/oder mindestens eine am eigenen Fahrzeug angeordnete, eigens hierfür vorgesehene Schriftanzeige, beispielsweise eine Leuchtund/oder Laufschriftanzeige. Ferner kann das zumindest von einem anderen Fahrzeug wahrnehmbare Signal ein von zumindest einem anderen Fahrzeug empfangbares und beispielsweise zur Auslösung einer Warnung des Fahrers des anderen Fahrzeugs und/oder zum Eingriff in die Steuerung des anderen Fahrzeugs geeignetes Funksignal umfassen. Dieses Funksignal kann zusätzliche Informationen enthalten, wie z. B. Art und/oder voraussichtliche Dauer des mit zur kritischen Situation geführten Betriebszustands, und/oder sonstiger Informationen, wie z. B. berechnete bzw. zu erwartende Trajektorie insbesondere eines autonomen und/oder semiautonomen Fahrvorgangs.

Ein zweiter Gegenstand der Erfindung betrifft ein Verfahren zur Überwachung und Signalisierung von Verkehrssituationen im Umfeld eines Fahrzeugs und damit zur Verringerung der Unfallgefahr während einer kritischen Situation eines eigenen Fahrzeugs. Das Verfahren sieht vor, in einem ersten Verfahrensschritt einen Betriebszustand des eigenen Fahrzeugs permanent oder in regelmäßigen, bevorzugt kurz aufeinander folgenden Zyklen zu überwachen. Gleichzeitig wird in einem zweiten Verfahrensschritt die Umgebung des eigenen Fahrzeugs auf die Präsenz bzw. Anwesenheit wenigstens eines anderen Verkehrsteilnehmers hin überwacht. Auch dies kann permanent oder in regelmäßigen, bevorzugt kurz aufeinander folgenden Zyklen erfolgen. Anschließend wird in einem dritten Verfahrensschritt festgestellt, ob sich das eigene Fahrzeug in einer durch Vorliegen wenigstens eines bestimmten Betriebszustands des eigenen Fahrzeugs sowie zusätzlich der Präsenz zumindest eines anderen Verkehrsteilnehmers in der Umgebung des eigenen Fahrzeugs ergebenden kritischen Situation befindet. Liegt keine wie zuvor definierte kritische Situation vor, befindet sich das eigene Fahrzeug also z. B. in einem normalen oder allgemein erwarteten Betriebszustand und/oder befindet sich kein anderer Verkehrsteilnehmer, wie etwa ein Fußgänger, ein Radfahrer oder ein anderes Fahrzeug in der Umgebung des eigenen Fahrzeugs, kann das Verfahren mit dem ersten Verfahrensschritt wieder neu gestartet oder beendet werden. Befindet sich das eigene Fahrzeug in einer im dritten Verfahrensschritt festgestellten, durch Vorliegen wenigstens eines bestimmten Betriebszustands des eigenen Fahrzeugs sowie zusätzlich der Präsenz zumindest eines anderen Verkehrsteilnehmers in der Umgebung des eigenen Fahrzeugs definierten kritischen Situation, wird in einem vierten Verfahrensschritt wenigstens ein anderer Verkehrsteilnehmer, beispielsweise ein Fahrer zumindest eines anderen Fahrzeugs oder ein Fußgänger oder ein Fahrradfahrer, beispielsweise durch Ausgabe eines Signals gewarnt, dass eine kritische Situation vorliegt. Dadurch kann der zumindest eine andere Verkehrsteilnehmer geeignet reagieren, wodurch die Unfallgefahr während der kritischen Situation verringert wird. Anschließend kann das Verfahren mit dem ersten Verfahrensschritt wieder neu gestartet oder beendet werden.

Die Erfindung behebt den Nachteil des Standes der Technik, dass heutige Fahrzeuge, sei es durch einen Betriebszustand, in dem autonome und/oder semiautonome Fahrvorgänge von Fahrassistenzsystemen durchgeführt werden, oder während eines Rangierbetriebs mit beispielsweise eingeschränkter Übersicht über das eigene Fahrzeug durch den Fahrer, oder in einem geräuscharmen oder geräuschfreien Betriebszustand des eigenen Fahrzeugs, wie etwa in einem reinen Elektrobetrieb, besonderen kritischen Situationen ausgesetzt sind, welche der Umgebung bisher nicht angezeigt werden.

Als Beispiel sei ein eigenes Fahrzeug angeführt, welches über ein Fahrassistenzsystem verfügt, welches einen autonomen und/oder semiautonomen Fahrvorgang durchzuführen in der Lage ist, beispielsweise ein Ein- und/oder Ausparksystem. Mit Hilfe der Erfindung kann unter der Voraussetzung, dass zusätzlich zu dem Vorliegen beispielsweise eines autonomen und/oder semiautonomen Fahrvorgangs ein weiterer Verkehrsteilnehmer in der Umgebung präsent ist, beispielsweise diesem oder der gesamten Umgebung angezeigt werden, dass ein autonomer und/oder semiautonomer Fahrvorgang, beispielsweise einen Ein- und/oder Ausparkvorgang des eigenen Fahrzeugs, ausgeführt wird. Dadurch bekommen andere Verkehrsteilnehmer eine Information, dass sich das eigene Fahrzeug in einem anderen auch als Modus bezeichenbaren Fahr- bzw. Betriebszustand als normal oder allgemein erwartet befindet und können entsprechend reagieren.

### Kurze Beschreibung der Zeichnung

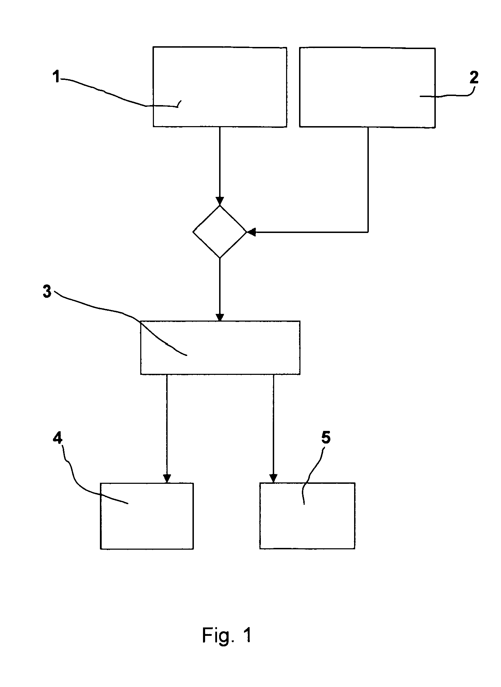

Die Erfindung wird nachfolgend anhand der in Figur 1 beschriebenen Ausführungsbeispiele näher erläutert.

### Wege zur Ausführung der Erfindung

Ein in einem Fahrzeug angebrachte erfindungsgemäße Vorrichtung kann derart ausgestaltet sein, dass, um eine Unfallgefahr während eines autonomen und/oder semiautonomen Fahrvorgangs des Fahrzeugs zu verringern, ein Fahr- bzw. Betriebszustand des eigenen Fahrzeugs 1 überwacht wird und dass ebenso die Umgebung des eigenen Fahrzeugs zumindest hinsichtlich einer Präsenz wenigstens eines anderen Verkehrsteilnehmers gemäß Block 2 überwacht wird. Anhand der Überwachung des Betriebszustands gemäß Block 1 wird festgestellt, ob sich das eigene Fahrzeug in einem normalen Betriebszustand oder in wenigstens einem bestimmten, zum Vorliegen einer kritischen Situation beitragenden Betriebszustand befindet. Parallel hierzu wird anhand der Überwachung der Umgebung des eigenen Fahrzeugs (Block 2) festgestellt, ob sich zumindest ein anderer Verkehrsteilnehmer in der Umgebung befindet. Liegen beide Voraussetzungen vor, wird gemäß Block 3 eine kritische Situation festgestellt wird mindestens ein anderer Verkehrsteilnehmer in der Umgebung des eigenen Fahrzeugs durch Ausgabe eines geeigneten Signals gemäß Block 4 gewarnt, dass eine kritische Situation vorliegt, welche gegeben ist, wenn sich das eigene Fahrzeug in zumindest einem zuvor festgestellten bestimmten Betriebszustand befindet und ebenso festgestellt wurde, dass zumindest ein anderer Verkehrsteilnehmer in der Umgebung des eigenen Fahrzeugs präsent ist.

Hierdurch wird die Unfallgefahr sowohl eines eigenen Fahrzeugs, als auch anderer Verkehrsteilnehmer in der Umgebung des eigenen Fahrzeugs verringert, indem ein Fahr- bzw. Betriebszustand des eigenen Fahrzeugs sowie die Umgebung des eigenen Fahrzeugs überwacht wird, und als Ergebnis der Überwachung rückgeschlossen wird, ob eine kritische Situation vorliegt, oder nicht. Um über das Vorliegen oder Nichtvorliegen einer kritischen Situation zu urteilen, wird festgestellt, ob ein anderer Verkehrsteilnehmer in der Umgebung des eigenen Fahrzeugs präsent ist, oder nicht, und ob sich das eigene Fahrzeug in einem normalen oder allgemein erwarteten Fahr- bzw. Betriebszustand oder in mindestens einem bestimmten, zu einer kritischen Situation beitragenden Fahr- bzw. Betriebszustand befindet. Ist sowohl ein anderer Verkehrsteilnehmer in der Umgebung des eigenen Fahrzeugs präsent und liegt mindestens ein bestimmter Fahr- bzw. Betriebszustand vor, liegt eine kritische Situation vor bzw. wird vom Vorliegen einer kritischen Situation ausgegangen und die Umgebung oder zumindest ein anderer Verkehrsteilnehmer in der Umgebung des eigenen Fahrzeugs gewarnt und auf das Vorliegen der kritischen Situation aufmerksam gemacht.

Wichtig ist hervorzuheben, dass selbstverständlich neben anderen Verkehrsteilnehmern auch der Fahrer des eigenen Fahrzeugs gemäß Block 5 durch eine Warnung vom Vorliegen einer kritischen Situation in Kenntnis gesetzt werden kann.

Ein Beispiel für einen solchen zu einer kritischen Situation beitragenden bestimmten Fahr- bzw. Betriebszustand ist ein autonomer und/oder semiautonomer Fahrvorgang. Befindet sich demnach das eigene Fahrzeug z. B. in einem einem autonomen und/oder semiautonomen Fahrvorgang entsprechenden speziellen Fahr- bzw. bestimmten Betriebszustand und befindet sich gleichzeitig ein oder mehrere Verkehrsteilnehmer in der Umgebung des eigenen Fahrzeugs, wird wenigstens ein anderer Verkehrsteilnehmer, beispielsweise durch Ausgabe eines Signals gewarnt, dass eine kritische Situation vorliegt. Dadurch kann der wenigstens eine andere Verkehrsteilnehmer geeignet reagieren, wodurch die Unfallgefahr während der kritischen Situation verringert wird. Diese Warnung bzw. dieses Signal kann auch eine Information über den zur kritischen Situation beitragenden Fahr- bzw. Betriebszustand enthalten, beispielsweise den zumindest einen anderen Verkehrsteilnehmer darüber informieren, dass sich das eigene Fahrzeug in dem autonomen und/oder semiautonomen Fahrvorgang befindet. Dadurch kann der zumindest eine andere Verkehrsteilnehmer noch gezielter reagieren und die Unfallgefahr kann weiter verringert werden.

Ferner ist möglich, dass zumindest ein Teil des Signals ein von einem anderen Fahrzeug wahrnehmbares Signal, z. B. ein Funksignal umfasst. Ein solches Funksignal wird auch als "car2car" Funksignal bezeichnet. Das von dem anderen Fahrzeug empfangene bzw. empfangbare Signal ist bevorzugt geeignet, z. B. Fahrassistenzsysteme des anderen Fahrzeugs vorzukonditionieren. Eine solche Vorkonditionierung kann beispielsweise ein Anlegen der Bremsscheiben umfassen, wodurch diese beispielsweise bei feuchtem Wetter getrocknet werden und dadurch im Notfall besser greifen. Auch kann vorgesehen sein, alternativ oder zusätzlich ein Bremsassistenzsystem in Bereitschaft zu setzen. Ebenso ist denkbar, dass alternativ oder zusätzlich Rückhaltesysteme im anderen Fahrzeug vorkonditioniert werden und/oder dessen Geschwindigkeit herabgesetzt wird und/oder sonstige Maßnahmen getroffen werden, um sowohl die Unfallgefahr, als vorzugsweise auch die Folgen eines potenziellen Unfalls zu verringern.

Das Verfahren kann mittels einer Vorrichtung zur Verringerung der Unfallgefahr während einer kritischen Situation eines eigenen Fahrzeugs, insbesondere Kraftfahrzeugs, insbesondere Personenkraftwagen, umgesetzt werden. Eine solche Vorrichtung ist mit einer Einrichtung zur Überwachung der Umgebung des eigenen Fahrzeugs auf eine Präsenz mindestens eines anderen Verkehrsteilnehmers in dieser Umgebung des eigenen Fahrzeugs hin ausgestattet. Weiter hat die Vorrichtung eine Einrichtung zur Überwachung eines Betriebszustands des eigenen Fahrzeugs. Darüber hinaus verfügt die Vorrichtung über eine Mensch-Maschine-Schnittstelle (HMI; Human Machine Interface), welche zumindest einen in der Umgebung des eigenen Fahrzeugs anwesenden anderen Verkehrsteilnehmer, beispielsweise einen Fahrer zumindest eines anderen Fahrzeugs oder einen Fußgänger oder einen Fahrradfahrer, mittels geeigneter Mittel, beispielsweise mittels einer Leuchtfunktionen einer oder mehrerer Fahrzeugleuchten, z. B. Wiederholblinkleuchte, kurz Blinker und/oder kurzes oder wiederholtes Aufleuchten und/oder Aufblenden der Fahr- und/oder Fernscheinwerfer und/oder beispielsweise akustischer Signale, kurz Hupe, warnt, wenn sich das eigene Fahrzeug in einer durch Vorliegen wenigstens eines bestimmten Betriebszustands des eigenen Fahrzeugs sowie Anwesenheit wenigstens eines anderen Verkehrsteilnehmers in der Umgebung des eigenen Fahrzeugs gegebenen kritischen Situation befindet. Um festzustellen, ob aufgrund der Überwachung von Betriebszustand und Umgebung des eigenen Fahrzeugs eine kritische Situation vorliegt, oder nicht, kann eine gesonderte Einrichtung vorgesehen sein, oder es kann eine geeignete Einrichtung des eigenen Fahrzeugs, beispielsweise ein Fahrassistenzsystem und/oder ein Steuergerät verwendet werden, welches beispielsweise zumindest über einen Rechner oder Mikroprozessor sowie einen diesem zugeordneten Speicher verfügt.

Bei einem zu einer kritischen Situation führenden, bzw. eine Voraussetzung zum Vorliegen einer kritischen Situation bildenden Betriebszustand des eigenen Fahrzeugs kann es sich beispielsweise um einen reinen Elektrobetrieb z. B. eines E-lektro- oder Hybridfahrzeugs handeln, in dem das eigene Fahrzeug so gut wie keine in der Umgebung wahrnehmbare Betriebs- und/oder Fahrgeräusche abgibt und/oder um einen autonomen oder semiautonomen Fahrvorgang, beispielsweise ein von einem Ein- und/oder Ausparksystem durchgeführten Ein- und/oder Ausparkvorgang, und/oder um einen Rangierbetrieb des eigenen Fahrzeugs.

Das Vorliegen einer kritischen Situation wird nachfolgend anhand eines auch als assistiertes Ein- und/oder Ausparken bezeichneten Betriebszustands des eigenen Fahrzeugs beschrieben.

Beim assistierten Ein- und/oder Ausparken berechnet ein als Ein- oder Ausparksystem ausgeführtes Fahrassistenzsystem mittels geeigneter Berechnungsmittel, üblicherweise ein Rechner mit zugeordnetem Speicher, anhand von durch eine zuvor mittels mit den Berechnungsmitteln verbundener, geeigneter Umfelderfassungssensoren, beispielsweise Ultraschallsensoren (UPA-Sensoren; Ultrasonic-Park-Assist-Sensoren) durchgeführte Parklückenvermessung gewonnener Parklückendaten eine Trajektorie, entlang der das eigene Fahrzeug kollisionsfrei in die Parklücke hinein und/oder aus dieser herausfahren kann. Dieses in die Parklücke Hinein- und/oder aus dieser Herausfahren kann als autonomer und/oder semiautonomer Fahrvorgang durchgeführt werden, bei dem im Falle eines autonomen Fahrvorgangs das Ein- und/oder Ausparksystem sowohl durch Vorwärtsund/oder Rückwärtsfahren die Längskontrolle, als auch durch eine Übernahme der Fahrzeuglenkung die Lenkkontrolle übernimmt, und bei dem im Falle eines semiautonomen Fahrvorgangs das Ein- und/oder Ausparksystem durch Vorwärtsund/oder Rückwärtsfahren die Längskontrolle oder durch eine Übernahme der Fahrzeuglenkung die Lenkkontrolle übernimmt und der Fahrer des eigenen Fahrzeugs unter Lenk- oder Fahranweisungen des Ein- und/oder Ausparksystem jeweils die andere Kontrolle, hier die Lenk- oder die Längskontrolle übernimmt, oder bei dem beispielsweise bei einer anderen Ausgestaltung eines semiautonomen Fahrvorgangs das Ein- und/oder Ausparksystem dem Fahrer des eigenen Fahrzeugs Fahr- und Lenkanweisungen zum Vorwärts- und/oder Rückwärtsfahren sowie zur Fahrzeuglenkung gibt, der Fahrer also die tatsächliche Längs- und Lenkkontrolle innehat, aber darauf vertraut, dass bei einem Befolgen der Fahrund Lenkanweisungen der Ein- und/oder Ausparkvorgang kollisionsfrei vonstattengeht.

Beim assistierten Ein- und/oder Ausparken gibt es demnach eine Phase, während der Fahrer dem Ein- und/oder Ausparksystem vollkommen vertraut oder sogar die Längs- und/oder Lenkkontrolle einem beispielsweise das Fahrassistenzsystem umfassenden oder mit diesem verbundenen Steuergerät übergibt. Der Fahrer ist dabei zwar aus Sicherheitsgründen immer in der Lage einzugreifen und die Kontrolle zu übernehmen, aber es besteht rein von der funktionalen Sicherheit her immer eine Wahrscheinlichkeit, dass das eigene Fahrzeug nicht die der berechneten Trajektorie entsprechende Bahn abfährt, sondern sich in eine Situation gibt, welche zu einem Unfall führen kann.

Eine besonders kritische Situation liegt vor allem dann vor, wenn es neben Sachauch noch zu Personenschäden kommen kann. Dies ist dann der Fall, wenn sich nicht nur Objekte, wie etwa eine Fahrbahnrandbebauung, eine Bepflanzung oder Gegenstände in der Umgebung des Fahrzeugs befinden, sondern auch noch andere Verkehrsteilnehmer.

Deshalb ist bei der Erfindung zur Verringerung der Unfallgefahr vorgesehen, zusätzlich zur Bestimmung eines bestimmten, zu einer kritischen Situation beitragenden Fahr- und/oder Betriebszustands des eigenen Fahrzeugs zu ermitteln, ob ein anderer Verkehrsteilnehmer in der Umgebung des eigenen Fahrzeugs präsent ist. Liegt sowohl ein bestimmter Betriebszustand des eigenen Fahrzeugs vor und hält sich außerdem ein anderer Verkehrsteilnehmer in der Umgebung des eigenen Fahrzeugs währenddessen auf, liegt demnach eine kritische Situation vor und wenigstens ein anderer Verkehrsteilnehmer in der Umgebung des eigenen Fahrzeugs wird durch eine geeignete Signalisierung vom Vorliegen der kritischen Situation gewarnt. Bei dem wenigstens einen anderen Verkehrsteilnehmer in der Umgebung des eigenen Fahrzeugs, der durch die Signalisierung vom Vorliegen der kritischen Situation gewarnt wird handelt es sich bevorzugt um denjenigen oder diejenigen Verkehrsteilnehmer, dessen bzw. deren Präsenz in der Umgebung des eigenen Fahrzeugs detektiert wurde. Mittels der Erfindung wird so die Unfallgefahr verringert, indem die anderen Verkehrsteilnehmer entsprechend informiert werden, so dass sie geeignet reagieren können.

Sich durch die Erfindung darüber hinaus ergebende Vorteile sind eine Steigerung der Verkehrssicherheit sowohl von mit einer beschriebenen Vorrichtung ausgestatteten Fahrzeugen, als auch von anderen, sich in der Umgebung eines mit einer solchen Vorrichtung ausgestatteten Fahrzeugs befindenden Verkehrsteilnehmern. Dies hilft Verkehrsunfallfolgekosten zu verringern und kann beispielsweise zu einer kostengünstigeren Sicherheitseinstufung für mit einer erfindungsgemäßen Vorrichtung ausgestattete Fahrzeuge, beispielsweise eine verbraucherfreundlichere, günstigere Versicherungseinstufung, führen.

Wichtig ist hervorzuheben, dass die Erfindung unter anderem insbesondere auch zur Anwendung in Verbindung mit Ein- und/oder Ausparksystemen besonders geeignet ist. Selbstverständlich kann sie auch für jedwede Art von Betriebszuständen eines Fahrzeugs vorgesehen sein, von denen im Vergleich zum normalen Fahrbetrieb eine besondere oder zumindest höhere Gefährdung aller Verkehrsteilnehmer einschließlich des eigenen Fahrzeugs im Umfeld des eigenen Fahrzeugs auszugehen ist.

## Patentansprüche

1. Vorrichtung und Verfahren zur Überwachung und Signalisierung von Verkehrssituationen und Betriebszuständen in einem Fahrzeug und im Umfeld des Fahrzeugs, **gekennzeichnet durch** eine Einrichtung zur Überwachung der Umgebung des eigenen Fahrzeugs auf eine Präsenz mindestens eines anderen Verkehrsteilnehmers hin, eine Einrichtung zur Überwachung eines Betriebszustands des eigenen Fahrzeugs, sowie eine Mensch-Maschine-Schnittstelle (HMI), welche zumindest einen in der Umgebung des eigenen Fahrzeugs anwesenden anderen Verkehrsteilnehmer mittels geeigneter Mittel warnt, wenn sich das eigene Fahrzeug in einer **durch** Vorliegen wenigstens eines bestimmten Betriebszustands des eigenen Fahrzeugs und Anwesenheit wenigstens eines anderen Verkehrsteilnehmers in der Umgebung des eigenen Fahrzeugs gegebenen kritischen Situation befindet.

2. Vorrichtung nach Anspruch 1, **dadurch gekennzeichnet, dass** es sich bei dem mindestens einen mit zum Vorliegen einer kritischen Situation beitragenden Betriebszustand um einen reinen Elektrobetrieb und/oder um einen autonomen oder semiautonomen Fahrvorgang und/oder um einen Rangierbetrieb des eigenen Fahrzeugs handelt.

3. Vorrichtung nach Anspruch 1 oder 2, **dadurch gekennzeichnet, dass** die Mittel ein von der Umgebung wahrnehmbares externes Signal erzeugen.

4. Vorrichtung nach Anspruch 1, 2 oder 3, **dadurch gekennzeichnet, dass** die Mittel ein von zumindest einem anderen Fahrzeug und/oder dem Fahrer des eigenen Fahrzeugs wahrnehmbares Signal erzeugen.

5. Vorrichtung nach einem der Ansprüche 1 bis 4, **dadurch gekennzeichnet, dass** das HMI den wenigstens einen anderen Verkehrsteilnehmer über die Art des die kritische Situation mit herbeirufenden Betriebszustands informiert.

6. Vorrichtung nach einem der vorhergehenden Ansprüche, **dadurch gekennzeichnet, dass** die geeigneten Mittel zumindest eine ein von der Umgebung wahrnehmbares Lichtsignal erzeugende Wiederholblinkleuchte des eigenen Fahrzeugs umfassen.

7. Vorrichtung nach einem der vorhergehenden Ansprüche, **dadurch gekennzeichnet, dass** die geeigneten Mittel wenigstens eine ein von der Umgebung wahrnehmbares akustisches Signal erzeugende akustische Signaleinrichtung umfassen.

8. Vorrichtung nach einem der vorhergehenden Ansprüche, **dadurch gekennzeichnet, dass** die geeigneten Mittel mindestens eine ein von der Umgebung wahrnehmbares Lichtsignal erzeugende Leuchtenfunktion zumindest einer Leuchte des eigenen Fahrzeugs umfassen.

9. Vorrichtung nach einem der vorhergehenden Ansprüche, **dadurch gekennzeichnet, dass** die geeigneten Mittel mindestens eine ein von der Umgebung wahrnehmbares Schriftsignal erzeugende Schriftanzeige des eigenen Fahrzeugs umfassen.

10. Vorrichtung nach einem der vorhergehenden Ansprüche, **dadurch gekennzeichnet, dass** die geeigneten Mittel mindestens einen ein zumindest von einem anderen Fahrzeug empfangbares Funksignal erzeugenden Sender umfassen.

11. Vorrichtung nach Anspruch 10, **dadurch gekennzeichnet, dass** das Funksignal zusätzliche Informationen trägt.

12. Verfahren zur Überwachung und Signalisierung von Verkehrssituationen und Betriebszuständen in einem Fahrzeug und im Umfeld des Fahrzeugs, **gekennzeichnet durch** die Verfahrensschritte:
- Überwachung eines Betriebszustands des eigenen Fahrzeugs (1);
- Überwachung der Umgebung des eigenen Fahrzeugs auf eine Präsenz mindestens eines anderen Verkehrsteilnehmers hin (2);
- Feststellung anhand der Überwachung des Betriebszustands des eigenen Fahrzeugs und anhand der Überwachung der Umgebung des eigenen Fahrzeugs, ob eine sich **durch** mindestens einen bestimmten Betriebszustand des eigenen Fahrzeugs sowie Präsenz zumindest eines anderen Verkehrsteilnehmers in der Umgebung des eigenen Fahrzeugs ergebende kritische Situation vorliegt, oder nicht (3);
- Warnung mindestens eines anderen Verkehrsteilnehmers und/oder dem Fahrer des eigenen Fahrzeugs bei Vorliegen einer kritischen Situation (4,5).
